# FASCICULE DE BREVET EUROPEEN

(11) **EP 1 826 059 B1**
(45) Date de publication et mention de la délivrance du brevet: **01.12.2010**
(21) Numéro de dépôt: 07290238.0
(22) Date de dépôt: 23.02.2007
(51) Int. Cl.: B60N 2/48

(54) **Assemblage d'une tige d'appui-tête sur un siège au moyen d'une gaine pourvue de trois ergots**
Montage einer Stange für eine Kopfstütze auf einem Sitz mit Hilfe einer Umhüllung, die mit drei Zentrierstiften ausgestattet ist
Assembly of a headrest rod on a seat using a sheath equipped with three lugs

(30) Priorité: 28.02.2006 FR 0601867
(43) Date de publication de la demande: 29.08.2007
(73) Titulaire: Centre d'Etude et de Recherche pour l'Automobile (CERA), 51100 Reims (FR)
(72) Inventeur: Dehondt, Thierry, 51430 Tinqueux (FR)
(74) Mandataire: Sayettat, Julien Christian

(56) Documents cités:
- DE-A1- 19 730 616
- DE-B3-102004 013 979
- FR-A1- 2 823 808
- US-A- 3 635 527
- US-B1- 6 361 112

## Description

L'invention concerne un dispositif d'assemblage d'un appui-tête sur un dossier de siège de véhicule automobile, une gaine d'un tel dispositif et un siège comprenant un appui-tête monté par un tel dispositif.

Il est connu, par exemple du document DE 10 2004 013 979, qui est considéré comme étant l'état de la technique le plus proche, de réaliser un dispositif d'assemblage d'un appui-tête sur un dossier de siège de véhicule automobile, ledit dispositif comprenant une tige, issue notamment dudit appui-tête, et une gaine, comprise notamment dans ledit dossier, ladite gaine comprenant un conduit rectiligne débouchant de section analogue à celle de ladite tige de sorte à recevoir ladite tige, dans lequel ladite tige est en contact serrant contre ledit conduit au moyen d'un organe élastique, tel qu'un ressort, ledit organe élastique permettant de maintenir ladite tige en compression contre ladite gaine.

Un tel agencement permet d'éviter d'avoir un jeu entre la gaine et la tige, susceptible de générer des bruits parasites et préjudiciable en termes de qualité perçue par l'utilisateur.

Bien que permettant de répondre au problème posé, un tel agencement présente néanmoins l'inconvénient d'être complexe et coûteux, ceci du fait de la présence de l'organe élastique qui doit être réalisé et monté sur la gaine.

L'invention a pour but de proposer un dispositif d'assemblage d'un appui-tête sur un dossier de siège de véhicule automobile de conception simplifiée.

A cet effet, et selon un premier aspect, l'invention propose un dispositif d'assemblage d'un appui-tête sur un dossier de siège de véhicule automobile, ledit dispositif comprenant une tige rectiligne et une gaine, ladite gaine comprenant un conduit rectiligne débouchant de section analogue à celle de ladite tige de sorte à recevoir ladite tige, la face interne dudit conduit comprenant deux ergots extrêmes, c'est à dire situés au voisinage des extrémités dudit conduit, et un ergot médian, c'est à dire situé entre lesdits ergots extrêmes, lesdits ergots extrêmes étant disposés sensiblement selon une génératrice commune et ledit ergot médian étant disposé sensiblement sur la génératrice opposée par rapport à l'axe dudit conduit, lesdits ergots étant respectivement agencés de sorte à créer un contact serrant avec ladite tige lorsque celle-ci est montée dans le conduit.

Dans la suite de cette description, les termes de positionnement dans l'espace (vertical, longitudinal, transversal,...) sont pris en référence au dispositif disposé dans le véhicule.

Dans la réalisation proposée, l'organe élastique est supprimé, le contact serrant étant obtenu en jouant simplement sur les géométries respectives des ergots de sorte à créer un appui de type « trois points » de la tige contre les ergots.

Un tel contact serrant permet notamment, lorsque l'appui-tête est réglable en hauteur, un coulissement sous effort contrôlé de la tige dans la gaine.

Selon un deuxième aspect, l'invention propose une gaine d'un tel dispositif.

Selon un troisième aspect, l'invention propose un siège comprenant un appui-tête monté par au moins un tel dispositif.

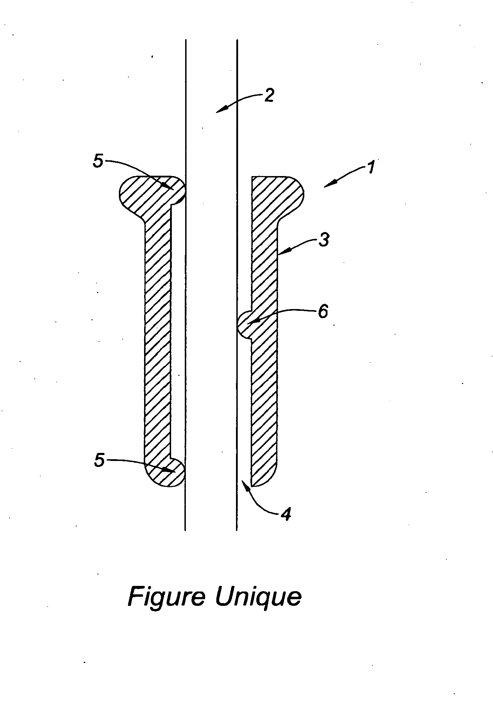

D'autres particularités et avantages de l'invention apparaîtront dans la description qui suit, faite en référence à la figure jointe qui est une représentation schématique en coupe longitudinale d'un dispositif selon un mode de réalisation de l'invention.

En référence à la figure, on décrit à présent un dispositif 1 d'assemblage d'un appui-tête sur un dossier de siège de véhicule automobile, ledit dispositif comprenant une tige 2 rectiligne et une gaine 3, ladite gaine comprenant un conduit 4 rectiligne débouchant de section analogue à celle de ladite tige de sorte à recevoir ladite tige, la face interne dudit conduit comprenant deux ergots extrêmes 5 et un ergot médian 6, lesdits ergots extrêmes étant disposés sensiblement selon une génératrice commune et ledit ergot médian étant disposé sensiblement sur la génératrice opposée par rapport à l'axe dudit conduit, lesdits ergots étant respectivement agencés de sorte à créer un contact serrant avec ladite tige.

La tige 2 est en contact serrant sur les trois ergots 5,6, un tel appui « trois points » permettant d'assurer l'absence de jeu entre ladite tige et la gaine 3, ladite tige étant introduite en force dans ladite gaine.

De façon non représentée, la gaine 3 peut comprendre un système de blocage réversible de la tige 2 en translation, par exemple sous forme de tiroir pouvant s'engager dans des crans prévus sur ladite tige, ceci de sorte à permettre un réglage en hauteur de l'appui-tête.

Selon une réalisation non représentée, l'ergot central 5 peut être monté sur une lame souple issue de matière de la gaine 3, par exemple par moulage lorsque ladite gaine est réalisée par injection de matière plastique, ladite lame étant agencée pour que ledit ergot central soit en appui contre la tige 2, une telle réalisation permettant de réaliser un contact moins serrant de sorte à faciliter le coulissement de ladite tige dans ladite gaine.

Selon une réalisation, les génératrices sur lesquelles sont disposés les ergots 5,6 appartiennent à un même plan vertical longitudinal.

Selon une réalisation non représentée, afin d'optimiser la suppression du jeu entre la tige 2 et la gaine 3, un appui-tête de siège de véhicule automobile assemblé par un dispositif 1 selon l'invention peut comprendre deux tiges 2 dont l'une au moins est destinée à être comprise dans ledit dispositif, lesdites tiges étant disposées sensiblement verticalement de part et d'autre dudit appui-tête, les projections desdites tiges sur un plan vertical transversal présentant un écart angulaire. De la sorte, les tiges 2 de l'appui-tête sont montées en force dans les gaines 3 par suppression de l'écart angulaire, puis relâchées de sorte à se mettre en appui latéral contre lesdites gaines, perpendiculairement à l'appui « trois points » longitudinal, précédemment décrit.

## Revendications

1. Dispositif (1) d'assemblage d'un appui-tête sur un dossier de siège de véhicule automobile, ledit dispositif comprenant une tige (2) rectiligne et une gaine (3), ladite gaine comprenant un conduit (4) rectiligne débouchant de section analogue à celle de ladite tige de sorte à recevoir ladite tige, ledit dispositif étant **caractérisé en ce que** la face interne dudit conduit comprend deux ergots extrêmes (5) et un ergot médian (6), lesdits ergots extrêmes étant disposés sensiblement selon une génératrice commune et ledit ergot médian étant disposé sensiblement sur la génératrice opposée par rapport à l'axe dudit conduit, lesdits ergots étant respectivement agencés de sorte à créer un contact serrant avec ladite tige.

2. Dispositif (1) selon la revendication 1, l'ergot central (5) étant monté sur une lame souple issue de matière de la gaine (3), ladite lame étant agencée pour que ledit ergot central soit en appui contre la tige (2).

3. Gaine (3) d'un dispositif selon l'une des revendications 1 ou 2, ladite gaine comprenant un conduit (4) rectiligne débouchant, ladite gaine étant **caractérisée en ce que** la face interne dudit conduit comprend deux ergots extrêmes (5) et un ergot médian (6), lesdits ergots extrêmes étant disposés sensiblement selon une génératrice commune et ledit ergot médian étant disposé sensiblement sur la génératrice opposée par rapport à l'axe dudit conduit.

4. Gaine (3) selon la revendication 3, l'ergot central (6) étant monté sur une lame souple issue de matière de la gaine (3).

5. Gaine (3) selon la revendication 3 ou 4, les génératrices sur lesquelles sont disposés les ergots (5,6) appartenant à un même plan vertical longitudinal.

6. Siège de véhicule automobile comprenant un appui-tête monté par au moins un dispositif (1) selon l'une quelconque des revendications 1 ou 2, ledit dispositif comprenant une tige (2) rectiligne et une gaine (3), ladite gaine comprenant un conduit (4) rectiligne débouchant de section analogue à celle de ladite tige de sorte à recevoir ladite tige, la face interne dudit conduit comprenant deux ergots extrêmes (5) et un ergot médian (6), lesdits ergots extrêmes étant disposés sensiblement selon une génératrice commune et ledit ergot médian étant disposé sensiblement sur la génératrice opposée par rapport à l'axe dudit conduit, lesdits ergots étant respectivement agencés de sorte à créer un contact serrant avec ladite tige.

7. Siège selon la revendication 6, lorsque la gaine (3) dépend de la revendication 5, l'appui-tête comprenant deux tiges (2) dont l'une au moins est comprise dans un dispositif (1), lesdites tiges étant disposées sensiblement verticalement de part et d'autre dudit appui-tête, lesdites tiges étant en appui latéral contre lesdites gaines, ledit appui étant réalisé du fait que les projections desdites tiges sur un plan vertical transversal, lorsque ledit appui-tête n'est pas monté, présentent un écart angulaire, ledit écart angulaire étant supprimé après montage dudit appui-tête.

## Claims

1. Device (1) for assembling a headrest on a backrest of a motor vehicle seat, said device comprising a straight rod (2) and a sheath (3), said sheath comprising a straight protruding conduit (4) of a section analogous to that of said rod in such a way as to receive said rod, said device being **characterised in that** the internal face of said conduit comprises two end lugs (5) and a median lug (6), said end lugs being arranged substantially according to a common generatrix and said median lug being arranged substantially on the opposite generatrix in relation to the axis of said conduit, said lugs being respectively arranged in such a way as to create a clamping contact with said rod.

2. Device (1) according to claim 1, the central lug (5) being mounted on a flexible blade coming from material of the sheath (3), said blade being arranged so that said central lug is bearing against the rod (2).

3. Sheath (3) of a device according to one of claims 1 or 2, said sheath comprising a straight protruding conduit (4), said sheath being **characterised in that** the internal face of said conduit comprises two end lugs (5) and a median lug (6), said end lugs being arranged substantially according to a common generatrix and said median lug being arranged substantially on the opposite generatrix in relation to the axis of said conduit.

4. Sheath (3) according to claim 3, the central lug (6) being mounted on a flexible blade coming from material of the sheath (3).

5. Sheath (3) according to claim 3 or 4, the generatrixes whereon are arranged the lugs (5, 6) belonging to the same longitudinal vertical plane.

6. Motor vehicle seat comprising a headrest mounted by at least one device (1) according to any of claims 1 or 2, said device comprising a straight rod (2) and a sheath (3), said sheath comprising a straight protruding conduit (4) of a section analogous to that of said rod in such a way as to receive said rod, the internal face of said conduit comprising two end lugs (5) and a median lug (6), said end lugs being arranged substantially according to a common generatrix and said median lug being arranged substantially on the opposite generatrix in relation to the axis of said conduit, said lugs being respectively arranged in such a way as to create a clamping contact with said rod.

7. Seat according to claim 6, when the sheath (3) is dependent on claim 5, the headrest comprising two rods (2) of which at least one is included in a device (1), said rods being arranged substantially vertically on either side of said headrest, said rods laterally bearing against said sheaths, said bearing being carried out due to the fact that the projections of said rods on a transversal vertical plane, when said headrest is not mounted, have an angular separation, said angular separation being suppressed after mounting of said headrest.

## Patentansprüche

1. Vorrichtung (1) zur Montage einer Kopfstütze auf einer Sitzlehne eines Automobils, wobei die besagte Vorrichtung ein geradliniges Gestänge (2) und eine Hülle (3) aufweist, und die besagte Hülle eine geradlinige Durchgangsröhre (4) enthält, deren Querschnitt jenem des besagten Gestänges entspricht, sodass sie das besagte Gestänge aufnimmt, wobei die besagte Vorrichtung **dadurch gekennzeichnet ist, dass** sich an der Innenseite der besagten Röhre zwei Rastnasen (5) an den Enden, sowie eine mittlere Rastnase (6) befinden, wobei die besagten Rastnasen an den Enden in etwa auf einer gemeinsamen Mantellinie angeordnet sind, und die besagte mittlere Rastnase auf der in Bezug auf die Achse der besagten Röhre gegenüberliegenden Mantellinie angeordnet ist, und die besagten Rastnasen jeweils so angeordnet sind, dass es zu einer engen Berührung mit dem besagten Gestänge kommt.

2. Vorrichtung (1) nach Anspruch 1, wobei die mittlere Rastnase (5) auf einer biegsamen Lamelle aus dem Material der Hülle (3) montiert ist, und die besagte Lamelle derart angeordnet ist, dass die besagte mittlere Rastnase am Gestänge (2) anliegt.

3. Hülle (3) einer Vorrichtung nach einem der Ansprüche 1 oder 2, wobei die besagte Hülle eine geradlinige Durchgangsröhre (4) enthält, und die besagte Hülle **dadurch gekennzeichnet ist, dass** sich an der Innenseite der besagten Röhre zwei Rastnasen (5) an den Enden und eine mittlere Rastnase (6) befinden, wobei die besagten Rastnasen an den Enden in etwa auf einer gemeinsamen Mantellinie angeordnet sind, und die besagte mittlere Rastnase in etwa auf der in Bezug auf die Achse der besagten Röhre gegenüberliegenden Mantellinie angeordnet ist.

4. Hülle (3) nach Anspruch 3, bei der die mittlere Rastnase (6) auf einer biegsamen Lamelle aus dem Material der Hülle (3) montiert ist.

5. Hülle (3) nach Anspruch 3 oder 4, bei der die Mantellinien, auf denen die Rastnasen (5, 6) angeordnet sind, einer selben senkrechten Längsebene angehören.

6. Sitz eines Automobils mit einer Kopfstütze, die zumindest durch eine Vorrichtung (1) nach irgendeinem der Ansprüche 1 oder 2 montiert wird, wobei die besagte Vorrichtung ein geradliniges Gestänge (2) und eine Hülle (3) enthält, wobei die besagte Hülle eine geradlinige Durchgangsröhre (4) enthält, deren Querschnitt jenem des besagten Gestänges entspricht, sodass sie das besagte Gestänge aufnimmt, wobei die besagte Vorrichtung **dadurch gekennzeichnet ist, dass** sich an der Innenseite der besagten Röhre zwei Rastnasen (5) an den Enden und eine mittlere Rastnase (6) befinden, wobei die besagten Rastnasen an den Enden in etwa auf einer gemeinsamen Mantellinie angeordnet sind, und die besagte mittlere Rastnase auf der in Bezug auf die Achse der besagten Röhre gegenüberliegenden Mantellinie angeordnet ist, und die besagten Rastnasen jeweils so angeordnet sind, dass es zu einer engen Berührung mit dem besagten Gestänge kommt.

7. Sitz nach Anspruch 6, wobei die Kopfstützte, wenn die Hülle (3) vom Anspruch 5 abhängt, zwei Gestänge (2) enthält, von denen zumindest eines in einer Vorrichtung (1) enthalten ist, wobei die Gestänge in etwa senkrecht beiderseits der besagten Kopfstütze angeordnet sind, und die besagten Gestänge seitlich an den besagten Hüllen anliegen, wobei die besagte seitliche Anlage **dadurch** entsteht, dass die Projektionen der besagten Gestänge auf eine senkrechte Querebene bei der besagten nicht montierten Kopfstütze einen Winkelversatz aufweisen, und der besagte Winkelversatz nach der Montage der besagten Kopfstütze verschwindet.
